# EUROPEAN PATENT SPECIFICATION

(11) **EP 1 164 674 B1**
(45) Date of publication and mention of the grant of the patent: **04.08.2010**
(21) Application number: 01113784.1
(22) Date of filing: 06.06.2001
(51) Int. Cl.: H02G 3/04

(54) **Flexible conduit**
Flexibles Leitungsrohr
Conduit flexible

(30) Priority: 16.06.2000 IT MI001343
(43) Date of publication of application: 19.12.2001
(73) Proprietor: GEWISS S.p.A., I-24069 Cenate Sotto (Bergamo) (IT)
(72) Inventor: Bosatelli, Domenico, 24069 Cenate Sotto (Bergamo) (IT)
(74) Representative: Forattini, Amelia

(56) References cited:
- DE-A- 19 930 151
- FR-A- 2 642 234
- GB-A- 1 139 382

## Description

The present invention relates to a flexible conduit particularly for electrical wiring.

Flexible corrugated conduits are ducts used to protect, contain and guide conducting wires for underfloor laying or for insertion in appropriately provided slots formed in walls, false ceilings or panels. The corrugated conduits are lightweight and can be flexed with little effort but at the same time are resistant to crushing and impacts as much as far heavier rigid ducts, allowing safe and low-cost installation. The conventional corrugated conduits are made of insulating material, usually PVC, PP, PE, having various diameters and different colorings in order to allow simple identification of the circuits inside them. They are extruded so as to obtain a corrugated profile which is constituted by rings which repeat longitudinally and regularly along the conduit. These conduits must have certain mechanical characteristics and their requirements are contained in specific standards used in the field of electrical technology.

For example, European standard CEI EN 50086-2-2 provides for a compression test at 750 NW on 5 cm of conduit for approximately 1 minute.

FR-A-2642234 discloses a ringed tube for electrical conductors, wherein the generatrix of the external surface has a recessed undulated profile with a wave shape having a flat crest and a flat trough. The length L₁ of the crest of the wave shape of the tube and the length L₂ of the trough of the wave shape are related by the following expression: 1.41 < L₁ / L₂ < 1.46.

As is known, the need to reduce the production costs of a manufactured article is constantly felt.

An aim of the present invention is to provide a flexible conduit, particularly for electrical wiring, which is cheaper than currently commercially available conduits.

An object of the invention is to provide a flexible conduit having better mechanical characteristics than currently commercially available conduits.

A further object of the invention is to provide a flexible conduit by using a smaller amount of raw material per unit length of conduit, with mechanical characteristics which meet or exceed the requirements of the standards.

A further object of the present invention is to provide a flexible conduit which is highly reliable and can also be manufactured with equipment suitable for manufacturing conventional conduits.

This aim, these objects and others which will become better apparent hereinafter are achieved by a flexible conduit comprising the features of claim 1.

Further characteristics and advantages will become better apparent from the description of preferred but not exclusive embodiments of the invention, illustrated only by way of non-limitative example in the accompanying drawings, wherein:
Figure 1 is a side partial view of an extrusion die for manufacturing a conventional flexible conduit;
Figure 2 is an enlarged-scale sectional side view of a detail of a profile of a recess between two annular walls of a conduit obtained with the die of Figure 1;
Figure 3 is a side partial view of an extrusion die for producing a flexible conduit according to the invention;
Figure 4 is a detailed enlarged-scale sectional side elevation view of a profile of a recess between two annular walls of the flexible conduit according to the invention;
Figure 5 is an enlarged-scale partial sectional view of the flexible conduit according to the invention;
Figure 6 is a detailed enlarged-scale sectional side view of a profile of a recess between two annular walls of the flexible conduit according to another aspect of the invention;
Figure 7 is a partial perspective view of a flexible conduit, particularly for electrical wiring, according to the invention.

With reference to the above cited figures, the flexible conduit according to the invention, generally designated by the reference numeral 1, is produced by extrusion using thermoplastic resins based on PVC or polypropylene and is corrugated.

The conduit accordingly includes corrugations formed by annular teeth 2, each of which includes a crest 3 and a bottom 4 and form a recess 5 between two adjacent teeth 2. The teeth 2 are arranged sequentially and longitudinally along the axis of the conduit and determine a pitch, i.e., the distance between two adjacent crests 3. Each corrugation is thus delimited by annular walls 6 which form, respectively, the tooth 2, which is open toward the inside of the conduit, and the recess 5, which is open toward the outside of the conduit. The annular walls 6 have outer faces 7 which give a substantially squared profile to the recess 5. The walls 6 are substantially vertical and have an inclination angle β, determined by the plane of the wall 6 and by the plane that is normal to the axis of the conduit, of approximately zero degrees.

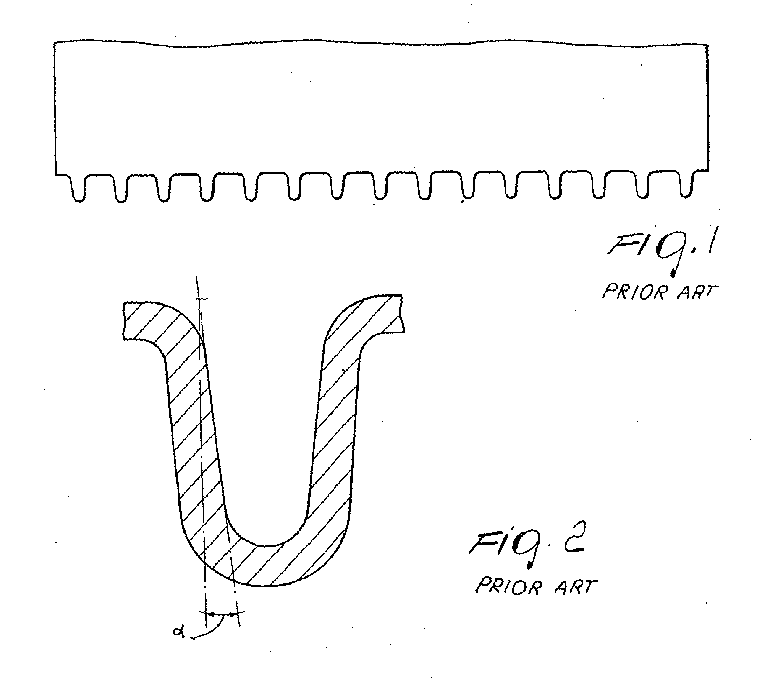

Accordingly, since the outer faces 7 are parallel with very good approximation, the substantially squared profile of the recess 5 has the same width along its entire vertical extension. This configuration differs from the profile of the corrugations of conventional flexible conduits, an example of which is shown in Figure 2. In this case, the walls of the tooth in fact have a substantial inclination, indicated as an angle α, such that the profile is substantially conical.

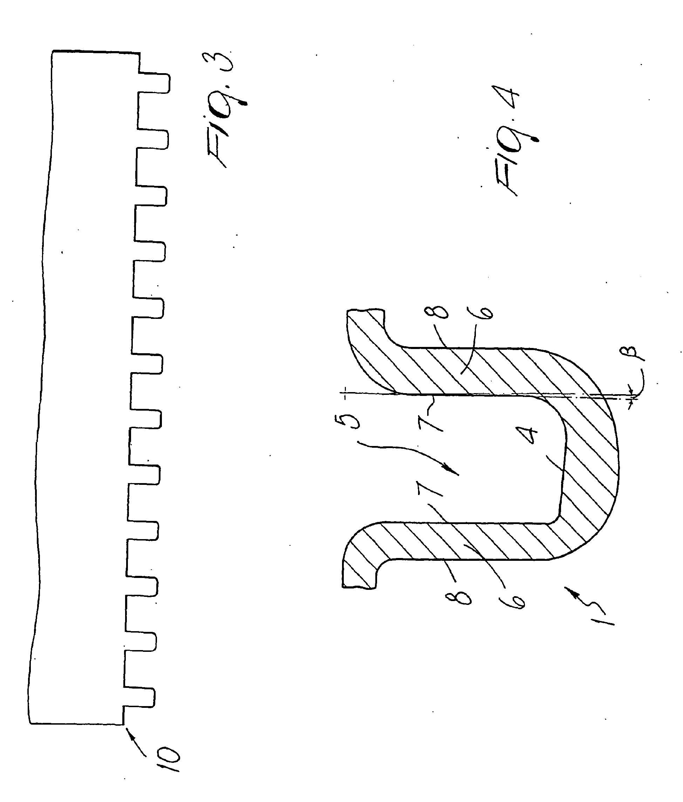

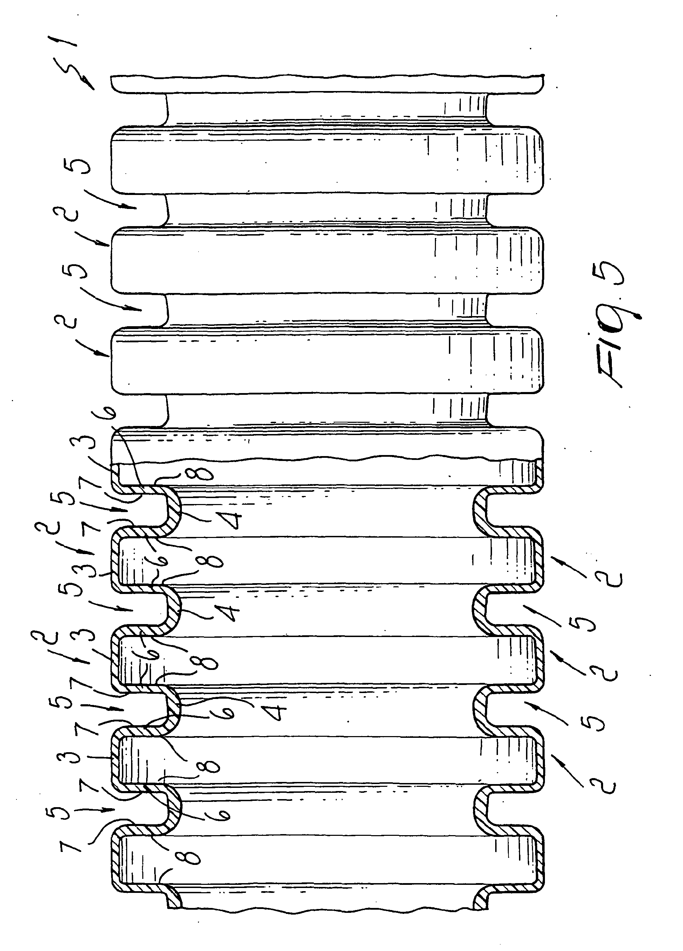

With particular reference to Figures 4 and 5, in the flexible conduit according to the invention the annular walls 6 also have inner faces 8 with an inclination of approximately zero degrees, and are thus substantially parallel to the outer faces 7. The thickness of the profile is constant along the annular walls 6 and is uniform, on the average, along the entire profile of the recess 5.

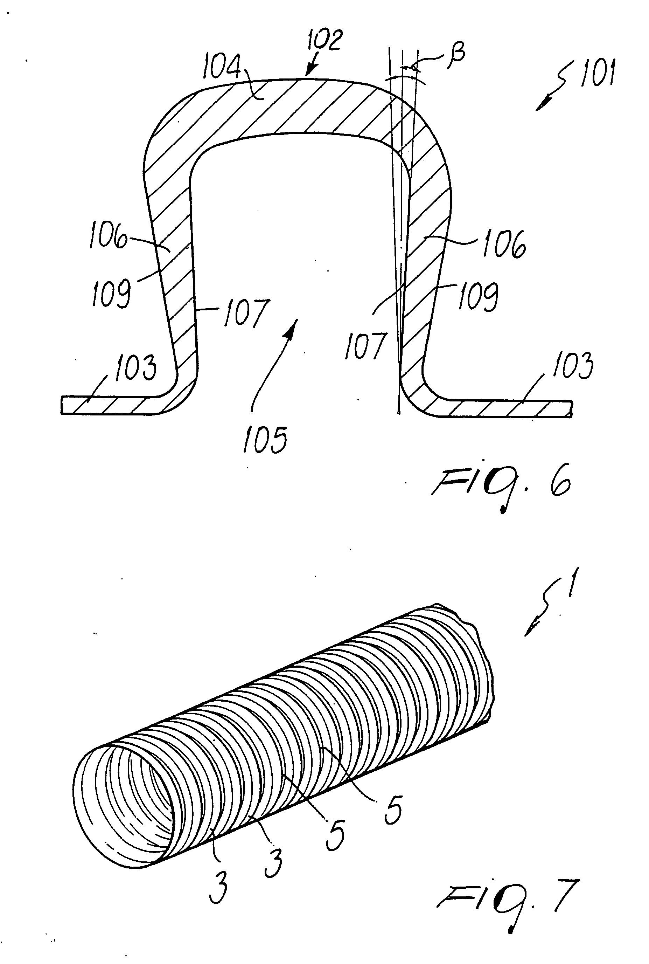

Figure 6 is a view of a flexible conduit, generally designated by the reference numeral 101, according to a further aspect of the invention. Flexible conduit 101 has corrugations formed by annular teeth 102. Each tooth 102 has a crest 103 and a bottom 104 forming a recess 105 between two adjacent teeth 102. The teeth 102 are arranged sequentially and longitudinally along the axis of the conduit, determining a pitch, i.e., the distance between two successive crests. The cylindrical surface of the conduit is deformed inward by a deformation means 10, of the type shown in Figure 3. Deformation means 10 forms the corrugations so that each corrugation has annular walls 106 which form, respectively, the tooth 102, which is open toward the inside of the conduit, and the recess 105, which is open toward the outside of the conduit. The annular walls 106 have outer faces 107 forming a substantially squared profile of the recess 105. The outer faces 107 are substantially vertical, forming an angle β, with respect to the plane that is normal to the axis of the conduit, of approximately zero degrees. According to this embodiment, the inner faces 109 of the annular walls 106 of the tooth 102 have a significant inclination with respect to the outer faces 107 which, as mentioned, are instead substantially vertical. In the specific case, the inner faces 109 diverge inward, and accordingly the thickness of the annular walls 106 tapers at the crest 103 and then increases toward the bottom 104 of the recess 105.

It should be noted that Figures 5 and 6 are highly enlarged views and show the real profile of the annular walls of the teeth and accordingly show a certain unevenness of the thicknesses; however, it is evident that the actual inclination angle of the walls of the tooth, the angle β, is substantially zero or approximately zero.

The following Table I describes an embodiment of the conduit according to the invention. In the table, the dimensions are given in mm and the number of teeth refers to a unit length of conduit equal to 56.52 mm which is defined by the standard extrusion die normally used to manufacture corrugated conduits of this type.

**Table I**

| Outside diameter | No. of teeth per unit length | Corrugation pitch | Tooth inclination (β) |
|---|---|---|---|
| 19-21 | 10 | 5.65 | ± 2° |
| 19-21 | 11 | 5.14 | ± 2° |
| 19-21 | 12 | 4.71 | ± 2° |

Table II lists in greater detail practical examples of embodiment of the conduit according to the invention in the sizes most commonly used commercially and identified by their nominal diameter.

**Table II**

| Nominal diameter | Outside diameter | | Inside diameter | | Corrugation pitch (mm) | Tooth inclination | | No. of teeth |
|---|---|---|---|---|---|---|---|---|
| | from (mm) | to (mm) | from (mm) | to (mm) | | From | to | |
| | | | | | 5.138 | -2° | 2° | 11 |
| 16 | 15.6 | 16.3 | 11 | 10.3 | 4.710 | -2° | 2° | 12 |
| | | | | | 4.348 | -2° | 2° | 13 |
| | | | | | 5.652 | -2° | 2° | 10 |
| 20 | 19.6 | 20.3 | 14.4 | 13.7 | 5.138 | -2° | 2° | 11 |
| | | | | | 4.710 | -2° | 2° | 12 |
| | | | | | 6.280 | -2° | 2° | 9 |
| 25 | 24.6 | 25.3 | 18.4 | 17.7 | 5.652 | -2° | 2° | 10 |
| | | | | | 5.138 | -2° | 2° | 11 |
| | | | | | 7.065 | -2° | 2° | 8 |
| 32 | 31.6 | 32.3 | 31.3 | 30.6 | 6.280 | -2° | 2° | 9 |
| | | | | | 5.652 | -2° | 2° | 10 |

In practice it has been observed that the invention achieves the intended aim and objects.

The substantially squared profile of the recess between two adjacent teeth in fact gives greater mechanical strength than a conventional profile.

It is thus possible to reduce the thickness of the profile of the teeth or reduce the number of teeth per unit length of conduit, or both, in order to achieve a mechanical strength which is equal to, or greater than, that of conduits having a conventional profile.

In such manner, according to the invention, it is possible for example to produce a flexible conduit with a lower consumption of raw material than a flexible conduit having an equal mechanical performance.

Moreover, as for example shown in the first embodiment, according to the invention, the reduction in the number of teeth per unit length and in the thickness of their profile has allowed to obtain an overall reduction in raw material, while at the same time increasing the thickness of the conduit at the base of two contiguous teeth, with an additional increase in the mechanical strength of the conduit.

Another advantage of the flexible conduit according to the present invention is that, since it is manufactured with less material per unit length, it causes less disposal problems when it is no longer usable.

Another advantage of the flexible conduit according to the present invention is a faster extrusion process for its production, because it has a smaller number of corrugations than a conventional conduit having the same performance.

The flexible conduit according to the invention is susceptible of numerous modifications and variations, within the scope of the appended claims. All the details may be replaced with other technically equivalent elements.

The materials used, as well as the dimensions, may of course be any according to requirements and to the state of the art.

## Claims

1. A flexible conduit comprising corrugations constituted by annular teeth (2; 102), each of which comprises two annular lateral walls (6; 106) which lie radially with respect to the axis of the conduit, said teeth forming recesses (5; 105) between them, said recesses (5; 105) having a substantially squared bottom, said annular lateral walls (6, 106) being each defined by inner lateral faces (8; 109) and by outer lateral faces (7; 107); **characterized in that** said outer lateral faces (7; 107) form an angle (β) of approximately zero degrees, with respect to the plane that is at a substantially right angle with respect to the axis of the conduit.

2. The flexible conduit according to claim 1, **characterized in that** said outer lateral faces (7; 107) form an angle (β) of zero to two degrees, with respect to the plane that is at a substantially right angle with respect to the axis of the conduit.

3. The flexible conduit according to claim 1, **characterized in that** said inner lateral faces (7) have an inclination angle (β) close to zero degrees with respect to the plane that is at a substantially right angle with respect to the axis of the conduit.

4. The flexible conduit according to claim 1, **characterized in that** said inner lateral faces have a different inclination angle with respect to said outer lateral faces (107), so that the thickness of said annular walls (106) tapers proximate to a crest (103) of said annular tooth (102).

5. The flexible conduit according to one or more of the preceding claims, **characterized in that** said teeth (2, 102) form a pitch, i.e., a distance between two corresponding points of adjacent teeth, which is between 4.5 and 6 mm.

6. The flexible conduit according to one or more of the preceding claims, **characterized in that** it comprises an outside diameter between 19 and 21 mm and a pitch between 4.5 and 6 mm.

7. The flexible conduit according to one or more of the preceding claims, **characterized in that** it comprises an outside diameter between 19 and 21 mm, a pitch between 4.5 and 6 mm, and a number of teeth (2, 102) between 10 and 12, for a segment of conduit measuring 56.52 mm in length.

8. The flexible conduit according to one or more of the preceding claims, **characterized in that** it comprises an outside diameter between 19 and 21 mm, a pitch of 4.71 mm, and 12 teeth in a segment of conduit measuring 56.52 mm in length.

9. The flexible conduit according to one or more of the preceding claims, **characterized in that** it comprises an outside diameter between 19 and 21 mm, a pitch of 5.14 mm, and 11 teeth in a segment of conduit measuring 56.52 mm in length.

10. The flexible conduit according to one or more of the preceding claims, **characterized in that** it comprises an outside diameter between 19 and 21 mm, a pitch of 5.65 mm, and 10 teeth in a segment of conduit measuring 56.52 mm in length.

## Patentansprüche

1. Flexible Leitung mit Wellungen, die durch ringförmige Zähne (2; 102) gebildet sind, deren jeder zwei ringförmige Seitenwände (6; 106) aufweisen, die mit Bezug auf die Achse der Leitung radial liegen, wobei die Zähne zwischen sich Vertiefungen (5; 105) bilden, die einen im Wesentlichen quadratischen Boden haben, wobei die Seitenwände (6; 106) jeweils durch Innenseitenflächen (8; 109) und Außenseitenflächen (7; 107) definiert sind, **dadurch gekennzeichnet, dass** die Außenseitenflächen (7; 107) zu der Ebene, die im Wesentlichen im rechten Winkel zu der Achse der Leitung liegt, einen Winkel (ß) von etwa Null Grad bilden.

2. Flexible Leitung nach Anspruch 1, **dadurch gekennzeichnet, dass** die Außenseitenflächen (7; 107) zu der Ebene, die im Wesentlichen im rechten Winkel zu der Achse der Leitung liegt, einen Winkel (ß) von etwa Null bis zwei Grad bilden.

3. Flexible Leitung nach Anspruch 1, **dadurch gekennzeichnet, dass** die Innenseitenflächen (7) einen Neigungswinkel (ß) von nahe Null Grad zu der Ebene aufweisen, die im Wesentlichen im rechten Winkel zu der Achse der Leitung liegt.

4. Flexible Leitung nach Anspruch 1, **dadurch gekennzeichnet, dass** die Innenseitenflächen einen unterschiedlichen Neigungswinkel zu den Außenseitenflächen (107) aufweisen, so dass die Dicke der ringförmigen Wände (106) sich zu einem Kamm (103) des ringförmigen Zahns (102) verjüngt.

5. Flexible Leitung nach einem oder mehreren der vorhergehenden Ansprüche, **dadurch gekennzeichnet, dass** die Zähne (2, 102) eine Teilung, d.h. einen Abstand zwischen zwei korrespondierenden Punkten benachbarter Zähne bilden, der zwischen 4,5 und 6 mm liegt.

6. Flexible Leitung nach einem oder mehreren der vorhergehenden Ansprüche, **dadurch gekennzeichnet, dass** diese einen Außendurchmesser zwischen 19 und 21 mm und eine Teilung zwischen 4,6 und 6 mm hat.

7. Flexible Leitung nach einem oder mehreren der vorhergehenden Ansprüche, **dadurch gekennzeichnet, dass** diese in einem 56,52 mm langen Segment der Leitung einen Außendurchmesser zwischen 19 und 21 mm, eine Teilung zwischen 4,5 und 6 mm und eine Anzahl von Zähnen (2, 102) zwischen 10 und 12 aufweist.

8. Flexible Leitung nach einem oder mehreren der vorhergehenden Ansprüche, **dadurch gekennzeichnet, dass** diese in einem 56,52 mm langen Segment der Leitung einen Außendurchmesser zwischen 19 und 21 mm, eine Teilung von 4,71 mm und 12 Zähne aufweist.

9. Flexible Leitung nach einem oder mehreren der vorhergehenden Ansprüche, **dadurch gekennzeichnet, dass** diese in einem 56,52 mm langen Segment der Leitung einen Außendurchmesser zwischen 19 und 21 mm, eine Teilung von 5,14 mm und 11 Zähne aufweist.

10. Flexible Leitung nach einem oder mehreren der vorhergehenden Ansprüche, **dadurch gekennzeichnet, dass** diese in einem 56,52 mm langen Segment der Leitung einen Außendurchmesser zwischen 19 und 21 mm, eine Teilung von 5,65 mm und 10 Zähne aufweist.

## Revendications

1. Conduit flexible comprenant des cannelures constituées par des dents annulaires (2 ; 102), chacune d'elles comprenant deux parois latérales annulaires (6 ; 106) qui se situent de manière radiale par rapport à l'axe du conduit, lesdites dents formant entre elles des évidements (5 ; 105), lesdits évidements (5 ; 105) présentant un fond sensiblement carré, lesdites parois latérales annulaires (6 ; 106) étant chacune définies par des faces latérales internes (8 ; 109) et par des faces latérales externes (7 ; 107) ; **caractérisé en ce que** lesdites faces latérales externes (7 ; 107) forment un angle (β) approximativement égal à zéro degré, par rapport au plan qui se situe sensiblement à angle droit par rapport à l'axe du conduit.

2. Conduit flexible selon la revendication 1, **caractérisé en ce que** lesdites faces latérales externes (7 ; 107) font un angle (β) compris entre zéro degré et deux degrés, par rapport au plan qui se situe sensiblement à angle droit par rapport à l'axe du conduit.

3. Conduit flexible selon la revendication 1, **caractérisé en ce que** lesdites faces latérales internes (7) présentent un angle d'inclinaison (β) proche de zéro degré, par rapport au plan qui se situe sensiblement à angle droit par rapport à l'axe du conduit.

4. Conduit flexible selon la revendication 1, **caractérisé en ce que** lesdites faces latérales internes présentent un angle d'inclination différent par rapport auxdites faces latérales externes (107), de telle sorte que l'épaisseur desdites parois annulaires (106) s'amincisse à proximité d'une crête (103) de ladite dent annulaire (102).

5. Conduit flexible selon une ou plusieurs des revendications précédentes, **caractérisé en ce que** lesdites dents (2 ; 102) présentent un pas, à savoir, une distance entre deux points correspondants de dents adjacentes, qui se situe entre 4,5 mm et 6 mm.

6. Conduit flexible selon une ou plusieurs des revendications précédentes, **caractérisé en ce qu'**il comprend un diamètre extérieur qui se situe entre 19 mm et 21 mm et un pas qui se situe entre 4,5 mm et 6 mm.

7. Conduit flexible selon une ou plusieurs des revendications précédentes, **caractérisé en ce qu'**il comprend un diamètre extérieur qui se situe entre 19 mm et 21 mm, un pas qui se situe entre 4,5 mm et 6 mm, et un nombre de dents (2 ; 102) compris entre 10 et 12, pour un segment de conduit qui mesure 56,52 mm de long.

8. Conduit flexible selon une ou plusieurs des revendications précédentes, **caractérisé en ce qu'**il comprend un diamètre extérieur qui se situe entre 19 mm et 21 mm, un pas qui est égal à 4,71 mm, et 12 dents, pour un segment de conduit qui mesure 56,52 mm de long.

9. Conduit flexible selon une ou plusieurs des revendications précédentes, **caractérisé en ce qu'**il comprend un diamètre extérieur qui se situe entre 19 mm et 21 mm, un pas qui est égal à 5,14 mm, et 11 dents, pour un segment de conduit qui mesure 56,52 mm de long.

10. Conduit flexible selon une ou plusieurs des revendications précédentes, **caractérisé en ce qu'**il comprend un diamètre extérieur qui se situe entre 19 mm et 21 mm, un pas qui est égal à 5,65 mm, et 10 dents, pour un segment de conduit qui mesure 56,52 mm de long.
